# EUROPEAN PATENT SPECIFICATION

(11) **EP 3 315 321 B1**
(45) Date of publication and mention of the grant of the patent: **26.08.2020**
(21) Application number: 17193152.0
(22) Date of filing: 26.09.2017
(51) Int. Cl.: B60C 5/14, B60C 19/08, B60C 15/06

(54) **PNEUMATIC TIRE**
LUFTREIFEN
PNEUMATIQUE

(30) Priority: 28.10.2016 JP 2016211160
(43) Date of publication of application: 02.05.2018
(73) Proprietor: Sumitomo Rubber Industries, Ltd., Kobe-shi, Hyogo-ken (JP)
(72) Inventor: KUDO, Daisuke, Kobe-shi, Hyogo 651-0072 (JP)
(74) Representative: Manitz Finsterwald Patent- und Rechtsanwaltspartnerschaft mbB

(56) References cited:
- EP-A1- 2 402 175
- JP-A- 2012 125 969
- JP-A- 2013 184 654
- JP-A- 2015 120 445
- US-A1- 2013 230 697

## Description

This application claims priority on Patent Application No. 2016-211160 filed in JAPAN on October 28, 2016.

### BACKGROUND OF THE INVENTION

### Field of the Invention

The present invention relates to pneumatic tires.

### Description of the Related Art

A tire includes an inner liner. The inner liner is joined to the inner surface of a carcass. The inner liner is formed from a crosslinked rubber having an excellent air blocking property. The inner liner maintains the internal pressure of the tire.

The inner liner is normally composed of two layers. These layers are each formed from a rubber composition. In the rubber composition for one of the layers (hereinafter, first layer), the principal component of the base rubber is a butyl rubber such as isobutylene-isoprene-rubber and halogenated isobutylene-isoprene-rubber. In the rubber composition for the other layer (hereinafter, second layer), the principal component of the base rubber is a diene rubber such as natural rubber. The first layer serves to maintain the internal pressure of the tire, and the second layer serves to join the first layer to the carcass.

Regarding the inner liner of the tire, various studies have been made in order to achieve weight reduction, improvement of adhesiveness, improvement of uniformity, and the like. One example of the studies is disclosed in JP2012-158166 (US2013/0230697).

Each of the first layer and the second layer described above has a thickness of about 1 mm. The conventional inner liner composed of the first layer and the second layer has a thickness of about 2 mm. The inner liner is provided so as to cover the entirety of the inner surface of the tire. The influence of the inner liner on the weight of the tire is great.

According to the technique disclosed in the above publication, an inner liner having a small thickness can be obtained. This inner liner is expected to contribute to weight reduction. However, in the case where this thin inner liner is used for a tire, in manufacture of the tire, when the inner liner is processed into a film shape and sent to the next step by a roller, the inner liner excessively sticks to the roller due to static electricity and cannot be sent to the next step in some cases.

Each bead portion of a tire is fitted to a rim. The bead portion is brought into contact with the rim. In the tire, a chafer is provided for protecting the bead portion. In manufacture of the tire, an intermediate component obtained by combining an inner liner and chafers is prepared and assembled to other components to prepare a raw cover. The above-described thin inner liner has inferior adhesiveness to a chafer. Thus, when the thin inner liner is left in a state of a raw cover, the inner liner may peel from the chafer.

Points to be improved remain regarding use of a thin inner liner for achieving weight reduction without deterioration of the internal pressure maintaining performance of a tire.

In JP 2015-120445A a pneumatic tire according to the preamble of claim 1 is disclosed.

In US 2013/0230697 A1 a pneumatic tire having an inner liner is disclosed, wherein the inner liner is produced from a strip including a first layer made of a thermoplastic elastomer composition containing a styrene-isobutylene-styrene block copolymer.

In JP 2012 125969 A and in EP 2 402 175 A1 pneumatic tires are disclosed having a polymer laminate as an inner liner. The polymer laminate has a first layer having a thickness of 0.05 mm to 0.6 mm and is made of a styrene-isobutylene-styrene triblock copolymer, and a second layer having a thickness of 0.01 to 0.3 mm and is made of a styrene-isobutylene diblock copolymer.

An object of the present invention is to provide a pneumatic tire in which weight reduction is achieved without deterioration of the internal pressure maintaining performance of the tire.

### SUMMARY OF THE INVENTION

A pneumatic tire according to the present invention is disclosed in claim 1. The carcass extends on and between one of the beads and the other of the beads. The inner liner is joined to an inner surface of the carcass. Each chafer is turned up around the bead. Each tie gum is located between the carcass and the chafer. The inner liner is formed from a thermoplastic elastomer composition including a styrene-isobutylene-styrene block copolymer and has a thickness of not greater than 1.5 mm. The tie gum joins the inner liner and the chafer and has a volume resistivity of not greater than 10⁸ Ω·cm.

In the pneumatic tire according to the present invention, the inner liner is thin. Since the inner liner is formed from the thermoplastic elastomer composition including the styrene-isobutylene-styrene block copolymer, the inner liner sufficiently maintains the internal pressure of the tire although the inner liner is thin. In addition, it is not necessary to use a layer formed from a rubber composition including a diene rubber as a base rubber as in a conventional inner liner, in order to join the inner liner to the inner surface of the carcass. The inner liner contributes to weight reduction. In the tire, weight reduction is achieved without deterioration of the internal pressure maintaining performance of the tire. In the pneumatic tire, a joint width of the inner liner and the tie gum is not less than 5 mm and not greater than 10 mm.

Furthermore, in the tire, the inner liner and the chafers are joined to each other by the tie gums provided between the carcass and the chafers. In the tire, since the tie gums have electrical conductivity, when the inner liner processed into a film shape is sent to the next step by a roller in manufacture of the tire, static electricity generated in the inner liner is discharged through the tie gums. Thus, the inner liner is sent to the next step without excessively sticking to the roller. Moreover, since the tie gums are interposed between the inner liner and the chafers, the inner liner is prevented from peeling from the chafers in a state of a raw cover prior to vulcanization. Regarding the tire, stable manufacture of the tire is possible with a conventional manufacturing facility. According to the present invention, a pneumatic tire in which weight reduction is achieved without deterioration of the internal pressure maintaining performance of the tire is obtained.

Preferably, in the pneumatic tire, the inner liner has a thickness of not less than 0.5 mm.

Preferably, in the pneumatic tire, the tie gum is a processed product of a tie gum sheet. The tie gum sheet has a width of not less than 25 mm and not greater than 40 mm.

Preferably, in the pneumatic tire, the tie gum sheet has a thickness of not less than 0.5 mm and not greater than 1.3 mm.

### BRIEF DESCRIPTION OF THE DRAWINGS

FIG. 1 is a cross-sectional view showing a portion of a pneumatic tire according to an embodiment of the present invention;
FIG. 2 is a cross-sectional view of the tire taken along the line II-II in FIG. 1; and
FIG. 3 is a conceptual diagram showing an intermediate component prepared for forming an inner liner, tie gums, and chafers of the tire in FIG. 1.

### DESCRIPTION OF THE PREFERRED EMBODIMENTS

The following will describe in detail the present invention based on preferred embodiments with appropriate reference to the drawings.

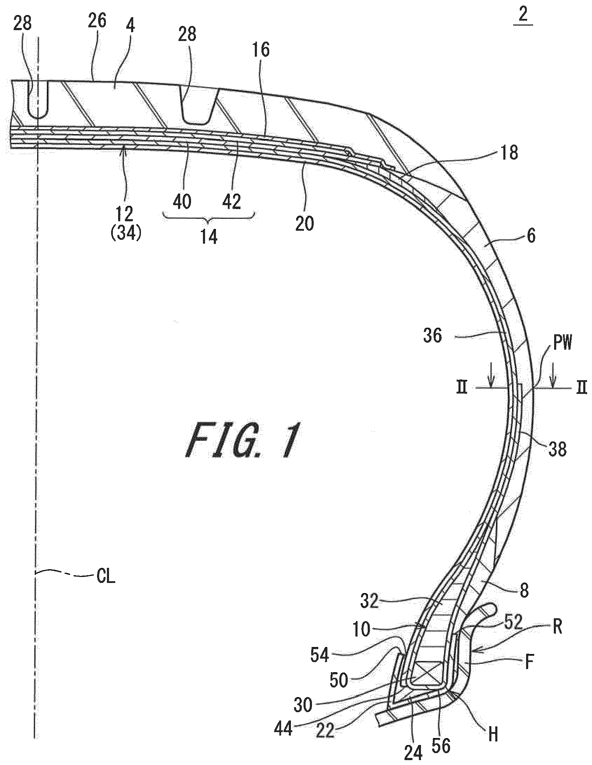

FIG. 1 shows a pneumatic tire 2. In FIG. 1, the up-down direction is the radial direction of the tire 2, the right-left direction is the axial direction of the tire 2, and the direction perpendicular to the surface of the sheet is the circumferential direction of the tire 2. In FIG. 1, an alternate long and short dash line CL represents the equator plane of the tire 2. The shape of the tire 2 is symmetrical about the equator plane except for a tread pattern. In FIG. 1, reference character PW indicates an axially outer end of the tire 2. The tire 2 has a maximum cross-sectional width at the outer end PW.

In FIG. 1, the tire 2 is mounted on a rim R. The rim R is a normal rim. The tire 2 is inflated with air. Accordingly, the internal pressure of the tire 2 is adjusted to a normal internal pressure. In the present invention, unless otherwise specified, the dimensions and the angles of each component of the tire 2 are measured in this state. That is, in the present invention, the dimensions and the angles of each component of the tire 2 are measured in a state where the tire 2 is mounted on the normal rim and inflated with air to the normal internal pressure. During the measurement, no load is applied to the tire 2. In the case where the tire 2 is designed for a passenger car, the dimensions and angles are measured in a state where the internal pressure is 180 kPa, unless otherwise specified.

In the present specification, the normal rim means a rim specified in a standard on which the tire 2 is based. The "Standard Rim" in the JATMA standard, the "Design Rim" in the TRA standard, and the "Measuring Rim" in the ETRTO standard are normal rims.

In the present specification, the normal internal pressure means an internal pressure specified in the standard on which the tire 2 is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures.

The tire 2 includes a tread 4, a pair of sidewalls 6, a pair of clinches 8, a pair of beads 10, a carcass 12, a belt 14, a band 16, a pair of cushion layers 18, an inner liner 20, a pair of chafers 22, and a pair of tie gums 24. The tire 2 is of a tubeless type. The tire 2 is mounted to a passenger car.

The tread 4 has a shape that is convex outward in the radial direction. The tread 4 forms a tread surface 26 that is brought into contact with a road surface. Grooves 28 are formed on the tread 4. The tread pattern is formed by the grooves 28. The tread 4 is formed from a crosslinked rubber. Particularly, a crosslinked rubber for which wear resistance, heat resistance, and grip performance are taken into consideration is used for a portion of the tread 4 that includes the tread surface 26.

Each sidewall 6 extends from the edge of the tread 4 substantially inward in the radial direction. A radially outer portion of the sidewall 6 is joined to the tread 4. A radially inner portion of the sidewall 6 is joined to the clinch 8. The sidewall 6 is formed from a crosslinked rubber that has excellent cut resistance and weather resistance. The sidewall 6 prevents the carcass 12 from being damaged.

Each clinch 8 is located substantially inward of the sidewall 6 in the radial direction. The clinch 8 is located outward of the bead 10 and the carcass 12 in the axial direction. The clinch 8 is formed from a crosslinked rubber that has excellent wear resistance. The clinch 8 comes into contact with a flange F of the rim R.

Each bead 10 is located inward of the clinch 8 in the axial direction. The bead 10 includes a core 30 and an apex 32 extending from the core 30 outward in the radial direction. The core 30 has a ring shape and includes a non-stretchable wound wire. A typical material of the wire is steel. The apex 32 is tapered outward in the radial direction. The apex 32 is formed from a crosslinked rubber having high hardness.

The carcass 12 includes a carcass ply 34. The carcass 12 of the tire 2 is composed of a single carcass ply 34. The carcass 12 may be composed of two or more carcass plies 34.

The carcass ply 34 extends on and between the beads 10 at both sides and along the tread 4 and each sidewall 6. The carcass ply 34 is turned up around each core 30 from the inner side toward the outer side in the axial direction. Because of this turning-up, a main portion 36 and a pair of turned-up portions 38 are formed in the carcass ply 34. The carcass ply 34 includes the main portion 36 and the pair of turned-up portions 38. The main portion 36 extends on and between one of the cores 30 and the other of the cores 30. Each turned-up portion 38 extends outward in the radial direction from the core 30.

The carcass ply 34 includes a large number of cords aligned with each other, and a topping rubber, which are not shown. The absolute value of the angle of each cord relative to the equator plane is 75° to 90°. In other words, the carcass 12 has a radial structure. The cords are formed from an organic fiber. Examples of preferable organic fibers include polyester fibers, nylon fibers, rayon fibers, polyethylene naphthalate fibers, and aramid fibers.

The belt 14 is located inward of the tread 4 in the radial direction. The belt 14 is laminated on the carcass 12. The belt 14 reinforces the carcass 12. The belt 14 includes an inner layer 40 and an outer layer 42. As is obvious from FIG. 1, the width of the inner layer 40 is slightly larger than the width of the outer layer 42 in the axial direction. Each of the inner layer 40 and the outer layer 42 includes a large number of cords aligned with each other, and a topping rubber, which are not shown. Each cord is tilted relative to the equator plane. The absolute value of the tilt angle is generally not less than 10° and not greater than 35°. The direction in which each cord of the inner layer 40 is tilted relative to the equator plane is opposite to the direction in which each cord of the outer layer 42 is tilted relative to the equator plane. The material of the cords is preferably steel. An organic fiber may be used for the cords. The width, in the axial direction, of the belt 14 is preferably equal to or greater than 0.7 times of the maximum width of the tire 2. The belt 14 may include three or more layers.

The band 16 is located outward of the belt 14 in the radial direction. The width of the band 16 is larger than the width of the belt 14 in the axial direction. The band 16 includes a cord and a topping rubber, which are not shown. The cord is helically wound. The band 16 has a so-called jointless structure. The cord extends substantially in the circumferential direction. The angle of the cord relative to the circumferential direction is not greater than 5° and further not greater than 2°. The belt 14 is held by the cord, so that lifting of the belt 14 is suppressed. The cord is formed from an organic fiber. Examples of preferable organic fibers include nylon fibers, polyester fibers, rayon fibers, polyethylene naphthalate fibers, and aramid fibers.

Each cushion layer 18 is laminated on the carcass 12 in the vicinity of the edge of the belt 14. The cushion layer 18 is formed from a flexible crosslinked rubber. The cushion layer 18 absorbs stress on the edge of the belt 14.

The inner liner 20 is located inward of the carcass 12. The inner liner 20 extends on and between one of the beads 10 and the other of the beads 10. In the tire 2, an edge 44 of the inner liner 20 is located inward of the apex 32 in the radial direction. Although described later, the inner liner 20 has an excellent air blocking property. The inner liner 20 maintains the internal pressure of the tire 2.

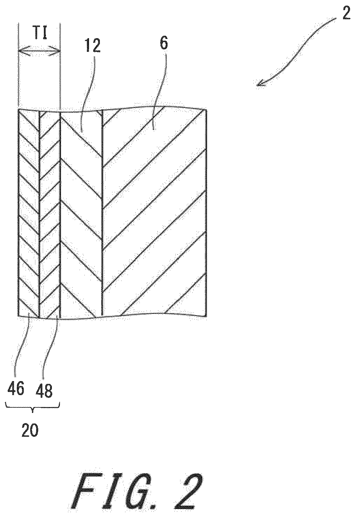

FIG. 2 shows a portion of a cross-section of the tire 2 taken along the line II-II in FIG. 1. In FIG. 2, the right-left direction is the axial direction of tire 2, the up-down direction is the circumferential direction of the tire 2, and the direction perpendicular to the surface of the sheet is the radial direction of the tire 2. The line II-II is a straight line that passes through the outer end PW shown in FIG. 1 and extends in the axial direction.

As shown in FIG. 2, the inner liner 20 of the tire 2 includes a first layer 46 and a second layer 48. Specifically, the inner liner 20 is composed of the first layer 46 and the second layer 48. The first layer 46 forms an inner portion of the inner liner 20, and the second layer 48 forms an outer portion of the inner liner 20. A plurality of other layers may be provided between the first layer 46 and the second layer 48.

In the tire 2, the inner liner 20 is joined to the inner surface of the carcass 12 without another member being interposed therebetween. In the tire 2, the second layer 48 is joined to the inner surface of the carcass 12, and the first layer 46 is joined to the carcass 12 via the second layer 48.

In the tire 2, each of the first layer 46 and the second layer 48 is formed from a thermoplastic elastomer composition. As described above, the inner liner 20 is composed of the first layer 46 and the second layer 48. The inner liner 20 is formed from a thermoplastic elastomer composition.

The thermoplastic elastomer composition for the first layer 46 includes a styrene-isobutylene-styrene block copolymer (also referred to as styrene-isobutylene-styrene triblock copolymer (SIBS)) as a base polymer. In other words, the thermoplastic elastomer composition for the inner liner 20 includes the styrene-isobutylene-styrene block copolymer.

The styrene-isobutylene-styrene block copolymer includes an isobutylene block. The isobutylene block contributes to an air blocking property. Thus, the first layer 46 including the styrene-isobutylene-styrene block copolymer is less likely to allow air to pass therethrough. The first layer 46 contributes to the air blocking property of the tire 2.

In the tire 2, in light of air blocking property, the proportion of the styrene-isobutylene-styrene block copolymer to the entire base polymer is preferably not less than 5% by weight and more preferably not less than 10% by weight. In light of air blocking property, this proportion is particularly preferably 100% by weight, but this proportion is preferably not greater than 80% by weight in consideration of processability.

In the tire 2, the molecular weight of the styrene-isobutylene-styrene block copolymer is not particularly limited. However, in light of fluidity, forming processability, rubber elasticity, and the like, the weight average molecular weight of the styrene-isobutylene-styrene block copolymer that is obtained by GPC (gel permeation chromatography) in terms of polystyrene is preferably not less than 50000 and preferably not greater than 400000. In light of air blocking property and durability, the weight proportion of the styrene component included in the styrene-isobutylene-styrene block copolymer is preferably not less than 10% by weight and preferably not greater than 30% by weight.

The base polymer for the first layer 46 can include a rubber component in addition to the above-described styrene-isobutylene-styrene block copolymer. Examples of the rubber component include isobutylene-isoprene-rubber, natural rubber, and isoprene rubber. In the case where the base polymer includes a rubber component, the proportion of the rubber component to the entire base polymer is preferably not less than 60% by weight in light of processability. In light of air blocking property, this proportion is preferably not greater than 95% by weight.

In the tire 2, the composition for the first layer 46 can include a tackifier. Examples of the tackifier include C9 petroleum resins and C5 petroleum resins. Examples of C9 petroleum resins include trade names "ARKON P70, P90, P100, P125, P140, M90, M100, M115, and M135", manufactured by Arakawa Chemical Industries, Ltd. Examples of C5 petroleum resins include trade names "Hi-Rez G100" manufactured by Mitsui Chemicals, Inc., and trade name "Marukarez T100AS" manufactured by Maruzen Petrochemical Co., Ltd. In the case where the composition includes a tackifier, the amount of the tackifier with respect to 100 parts by weight of the base polymer is preferably not less than 5 parts by weight from the standpoint that favorable stickiness is obtained. In light of processability, this amount is preferably not greater than 20 parts by weight.

In the tire 2, the composition for the first layer 46 can include chemicals, such as a filler such as carbon black, a lubricant such as stearic acid, an antioxidant, and the like, in addition to the above-described tackifier. In consideration of processability and performance of the tire 2, optimum chemicals are blended into the composition in optimum amounts.

The thermoplastic elastomer composition for the second layer 48 includes a base polymer. Examples of the base polymer used for the composition include a styrene-isoprene-styrene block copolymer (also referred to as styrene-isoprene-styrene triblock copolymer (SIS)) and a styrene-isobutylene copolymer (also referred to as styrene-isobutylene diblock copolymer (SIB)).

In the tire 2, the second layer 48 may be composed of a layer formed from a composition including the styrene-isoprene-styrene block copolymer as a base polymer, or may be composed of a layer formed from a composition including the styrene-isobutylene copolymer as a base polymer. The second layer 48 may be composed of a combination of one layer formed from a composition including the styrene-isoprene-styrene block copolymer as a base polymer and another layer formed from a composition including the styrene-isobutylene copolymer as a base polymer.

In the styrene-isoprene-styrene block copolymer, an isoprene block is a soft segment. The styrene-isoprene-styrene block copolymer contributes to the adhesiveness and the stickiness of the second layer 48. In the styrene-isobutylene copolymer, an isobutylene block is a soft segment. The styrene-isobutylene copolymer also contributes to the adhesiveness and the stickiness of the second layer 48.

In the tire 2, in the case where the base polymer includes the styrene-isoprene-styrene block copolymer, in light of adhesiveness and stickiness, the proportion of the styrene-isoprene-styrene block copolymer to the entire base polymer is preferably not less than 5% by weight and more preferably not less than 10% by weight. In light of adhesiveness and stickiness, this weight proportion is particularly preferably 100% by weight, but this proportion is preferably not greater than 80% by weight in consideration of processability.

In the tire 2, in the case where the base polymer includes the styrene-isobutylene copolymer, in light of adhesiveness and stickiness, the proportion of the styrene-isobutylene copolymer to the entire base polymer is preferably not less than 5% by weight and more preferably not less than 10% by weight. In light of adhesiveness and stickiness, this weight proportion is particularly preferably 100% by weight, but this proportion is preferably not greater than 80% by weight in consideration of processability.

In the tire 2, the molecular weight of the styrene-isoprene-styrene block copolymer is not particularly limited. However, in light of forming processability, rubber elasticity, and the like, the weight average molecular weight of the styrene-isoprene-styrene block copolymer that is obtained by GPC (gel permeation chromatography) in terms of polystyrene is preferably not less than 100000 and preferably not greater than 290000. In light of stickiness, adhesiveness, and rubber elasticity, the weight proportion of the styrene component included in the styrene-isoprene-styrene block copolymer is preferably not less than 10% by weight and preferably not greater than 30% by weight.

In the tire 2, the molecular weight of the styrene-isobutylene copolymer is not particularly limited. However, in light of forming processability, rubber elasticity, and the like, the weight average molecular weight of the styrene-isobutylene copolymer that is obtained by GPC (gel permeation chromatography) in terms of polystyrene is preferably not less than 40000 and preferably not greater than 120000. In light of stickiness, adhesiveness, and rubber elasticity, the weight proportion of the styrene component included in the styrene-isobutylene copolymer is preferably not less than 10% by weight and preferably not greater than 35% by weight.

In the tire 2, the composition for the second layer 48 can include chemicals, such as a rubber component such as natural rubber, a filler such as carbon black, a lubricant such as stearic acid, an antioxidant, and the like, in addition to the above-described base polymer. In consideration of processability and performance of the tire 2, optimum chemicals are blended into the composition in optimum amounts.

As described above, in the tire 2, the inner liner 20 is composed of the first layer 46 and the second layer 48. In light of productivity, the inner liner 20 may be composed of only the first layer 46. Whether, for example, the inner liner 20 is composed of the first layer 46 and the second layer 48 or the inner liner 20 is composed of only the first layer 46, is determined as appropriate according to the specifications of the tire 2.

As shown in FIG. 1, in the tire 2, each chafer 22 is located in the vicinity of the bead 10. The chafer 22 is turned up around the bead 10 from the inner side toward the outer side in the axial direction. An edge 50 (hereinafter, first edge) portion of the chafer 22 is located inward of the main portion 36 of the carcass 12 in the axial direction. The first edge 50 portion is located inward of the inner liner 20 in the axial direction. As shown, the first edge 50 of the chafer 22 is located outward of the edge 44 of the inner liner 20 in the radial direction. The first edge 50 of the chafer 22 is located outward of the core 30 in the radial direction. In the tire 2, the chafer 22 and the inner liner 20 overlap each other in the axial direction. Another edge 52 (hereinafter, second edge) portion of the chafer 22 is located outward of the turned-up portion 38 of the carcass 12 in the axial direction. The second edge 52 is interposed between the turned-up portion 38 and the clinch 8.

When the tire 2 is mounted onto the rim R, the chafer 22 comes into contact with the rim R. Because of this contact, the vicinity of the bead 10 is protected. The chafer 22 includes a fabric and a rubber with which the fabric is impregnated. In the tire 2, a chafer 22 formed from a crosslinked rubber may be used.

Each tie gum 24 is located between the carcass 12 and the chafer 22. In the tire 2, the tie gum 24 is located between the first edge 50 portion of the chafer 22 and an edge 44 portion of the inner liner 20. The position of an edge 54 (hereinafter, first edge) of the tie gum 24 coincides with the position of the first edge 50 of the chafer 22 in the radial direction. The tie gum 24 is formed from a crosslinked rubber having excellent adhesiveness. The tie gum 24 firmly joins to the carcass 12 and the inner liner 20 and also firmly joins to the chafer 22. Another edge 56 (hereinafter, second edge) of the tie gum 24 is located near the position of a heel (reference character H in FIG. 1) of the tire 2. In the tire 2, at a radially outer portion with respect to the position H, the tie gum 24 is not provided between the turned-up portion 38 and the chafer 22.

A rubber composition for each tie gum 24 includes a base rubber. In the tire 2, the principal component of the base rubber is preferably a diene rubber. The diene rubber contributes to adhesiveness.

Examples of the diene rubber include natural rubber, isoprene rubber, butadiene rubber, styrene-butadiene rubber, chloroprene rubber, and acrylonitrile butadiene rubber. In light of adhesiveness, natural rubber is preferable as the diene rubber. Two or more types of diene rubbers may be used in combination.

In the tire 2, in light of processability, the base rubber can include another rubber other than the diene rubber. Examples of the other rubber include ethylenepropylene rubber, urethane rubber, and acrylic rubber. As described above, the principal component of the base rubber is preferably the diene rubber. In the case where the base rubber includes another rubber other than the diene rubber, the proportion of the diene rubber to the entire base rubber is not less than 60% by weight and particularly preferably not less than 80% by weight.

The rubber composition includes a reinforcing agent. The reinforcing agent is typically carbon black. FEF, GPF, HAF, ISAF, SAF, and the like can be used.

The rubber composition can also include chemicals such as a filler, a softener, a tackifier, a crosslinking agent such as sulfur or the like, a vulcanization accelerator, a crosslinking activator, an antioxidant, and the like, in addition to the reinforcing agent. In consideration of processability and performance of the tire 2, optimum chemicals are blended into the rubber composition in optimum amounts.

In FIG. 2, a double-headed arrow TI represents the thickness of the inner liner 20. In the tire 2, the thickness TI of the inner liner 20 is not greater than 1.5 mm.

In the tire 2, the inner liner 20 is thin. Since the inner liner 20 is formed from the thermoplastic elastomer composition including the styrene-isobutylene-styrene block copolymer, the inner liner 20 sufficiently maintains the internal pressure of the tire 2 although the inner liner 20 is thin. In addition, it is not necessary to use a layer formed from a rubber composition including a diene rubber as a base rubber as in a conventional inner liner, in order to join the inner liner 20 to the inner surface of the carcass 12. The inner liner 20 contributes to weight reduction. In the tire 2, weight reduction is achieved without deterioration of the internal pressure maintaining performance of the tire 2.

When the inner liner 20 is excessively thin, the inner liner 20 may not be able to sufficiently maintain the internal pressure of the tire 2. From the standpoint that the inner liner 20 can sufficiently perform its function to maintain the internal pressure of the tire 2, the thickness TI of the inner liner 20 is preferably not less than 0.5 mm.

The tire 2 described above is manufactured as follows. In manufacture of the tire 2, a plurality of rubber components are assembled to obtain a raw cover (unvulcanized tire 2). The raw cover is put into a mold. The outer surface of the raw cover comes into contact with the cavity surface of the mold. The inner surface of the raw cover comes into contact with a bladder or a rigid core. The raw cover is pressurized and heated in the mold. A rubber composition of the raw cover flows due to the pressurization and the heating. Crosslinking reaction is caused in the rubber due to the heating, to obtain the tire 2 shown in FIG. 1. By using a mold having a rugged pattern on the cavity surface thereof, a rugged pattern is formed on the tire 2.

In manufacture of the tire 2, for forming the inner liner 20, the pair of tie gums 24, and the pair of chafers 22, an intermediate component obtained by combining these components is prepared.

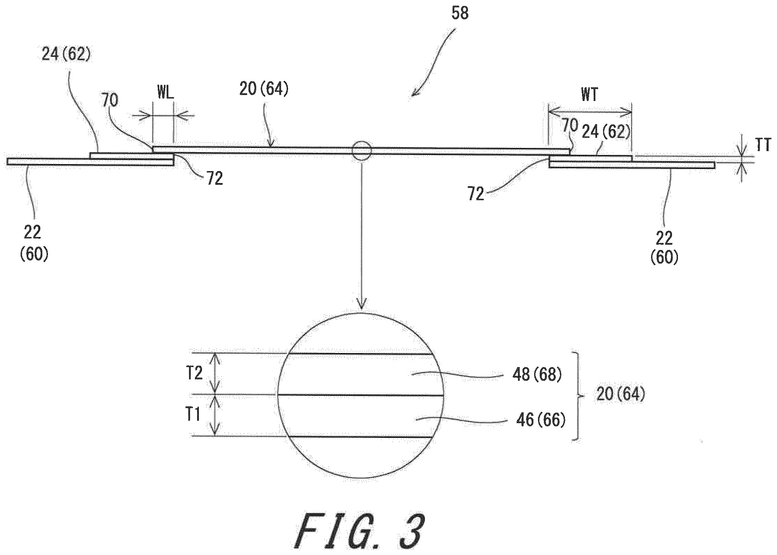

In manufacture of the tire 2, an intermediate component 58 shown in FIG. 3 is supplied to a former (not shown) and combined with other components to obtain a raw cover.

In manufacture of the tire 2, in a preparation step of preparing the intermediate component 58, fabrics are impregnated with a rubber, and sheet-shaped chafers 22 are prepared. In manufacture of the tire 2, the chafers 22 of the tire 2 shown in FIG. 1 are obtained by adjusting the shapes of the sheet-shaped chafers 22 and pressurizing and heating the sheet-shaped chafers 22 in a mold. The chafers 22 in the tire 2 are processed products of the sheet-shaped chafers 22. In the present invention, when the sheet-shaped chafers 22 are represented in distinction from the chafers 22 in the tire 2, the sheet-shaped chafers 22 are referred to as chafer sheets 60. The chafers 22 in the tire 2 are processed products of the chafer sheets 60. The length of each chafer sheet 60 is determined in consideration of the length, in the circumferential direction, of the chafer 22 in the tire 2. The width of each chafer sheet 60 is determined in consideration of the length of the chafer 22 in the cross-section of the tire 2 shown in FIG. 1.

In the preparation step, sheet-shaped tie gums 24 are prepared by extruding the rubber composition for the tie gums 24. In manufacture of the tire 2, the tie gums 24 of the tire 2 shown in FIG. 1 are obtained by adjusting the shapes of the sheet-shaped tie gums 24 and pressurizing and heating the sheet-shaped tie gums 24 in a mold. The tie gums 24 in the tire 2 are processed products of the sheet-shaped tie gums 24. In the present invention, when the sheet-shaped tie gums 24 are represented in distinction from the tie gums 24 in the tire 2, the sheet-shaped tie gums 24 are referred to as tie gum sheets 62. The tie gums 24 in the tire 2 are processed products of the tie gum sheets 62. The length of each tie gum sheet 62 is determined in consideration of the length, in the circumferential direction, of the tie gum 24 in the tire 2.

In the preparation step, a film-shaped inner liner 20 is prepared by co-extruding the thermoplastic elastomer composition for the first layer 46 and the thermoplastic elastomer composition for the second layer 48. In manufacture of the tire 2, the inner liner 20 of the tire 2 shown in FIG. 1 is obtained by adjusting the shape of the film-shaped inner liner 20 and pressurizing and heating the film-shaped inner liner 20 in a mold. The inner liner 20 in the tire 2 is a processed product of the film-shaped inner liner 20. In the present invention, when the film-shaped inner liner 20 is represented in distinction from the inner liner 20 in the tire 2, the film-shaped inner liner 20 is referred to as inner film 64. The inner liner 20 in the tire 2 is a processed product of the inner film 64. The inner film 64 is composed of a film-shaped first layer 46 and a film-shaped second layer 48. In the present invention, when the film-shaped first layer 46 is represented in distinction from the first layer 46 in the tire 2, the film-shaped first layer 46 is referred to as first film 66. When the film-shaped second layer 48 is represented in distinction from the second layer 48 in the tire 2, the film-shaped second layer 48 is referred to as second film 68. The length of the inner film 64 is determined in consideration of the length, in the circumferential direction, of the inner liner 20 in the tire 2. The width of the inner film 64 is determined in consideration of the length of the inner liner 20 in the cross-section of the tire 2 shown in FIG. 1.

In manufacture of the tire 2, after the chafer sheets 60, the tie gum sheets 62, and the inner film 64 are prepared, these components are combined as shown in FIG. 3. Accordingly, the intermediate component 58 is obtained.
The intermediate component 58 is composed of a pair of the chafer sheets 60, a pair of the tie gum sheets 62, and the inner film 64. In other words, the intermediate component 58 is composed of a pair of the chafers 22 processed into a sheet shape, a pair of the tie gums 24 processed into a sheet shape, and the inner liner 20 processed into a film shape.

In the intermediate component 58, the tie gum sheets 62 are laminated on the right and left chafer sheets 60, respectively. As shown in FIG. 3, the widths of the tie gum sheets 62 are set such that the tie gum sheets 62 are narrower than the chafer sheets 60. Thus, the entireties of the tie gum sheets 62 are laminated on the chafer sheets 60. Then, edge 70 portions of the inner film 64 are laminated on the right and left tie gum sheets 62, respectively. In this lamination, the first film 66 forming a part of the inner film 64 is laminated on the tie gum sheets 62. In the intermediate component 58, the edge 70 portions of the inner film 64 are joined to the tie gum sheets 62, and the tie gum sheets 62 are joined to the chafer sheets 60.

As described above, the rubber composition for the tie gums 24 includes carbon black as a reinforcing agent. Carbon black has a property of conducting electricity. Thus, the tie gums 24 have electrical conductivity. Specifically, the volume resistivity of each tie gum 24 is not greater than 10⁸Ω·cm. The tie gum sheets 62 are formed from the rubber composition for the tie gums 24. Thus, the tie gum sheets 62 also have electrical conductivity.

In the tire 2, the inner liner 20 and the chafers 22 are joined to each other by the tie gums 24 provided between the carcass 12 and the chafers 22. In the tire 2, since the tie gums 24 have electrical conductivity, when the intermediate component 58 including the inner liner 20 processed into a film shape is sent to the next step by a roller in manufacture of the tire 2, static electricity generated in the inner liner 20 is discharged through the tie gums 24 processed into a sheet shape. Thus, the intermediate component 58 is sent to the next step without excessively sticking to the roller. Moreover, since the tie gums 24 are interposed between the inner liner 20 and the chafers 22, the inner liner 20 is prevented from peeling from the chafers 22 in a state of the raw cover prior to vulcanization. Regarding the tire 2, stable manufacture of the tire 2 is possible with a conventional manufacturing facility. As described above, in the tire 2, weight reduction is achieved without deterioration of the internal pressure maintaining performance of the tire 2. That is, according to the present invention, the pneumatic tire 2 in which weight reduction is achieved without deterioration of the internal pressure maintaining performance of the tire 2 is obtained.

In FIG. 3, a double-headed arrow WL represents a joint width of the inner liner 20 and the tie gum 24. The joint width WL is obtained by measuring the length from the edge 70 of the inner film 64 to an edge 72 of the tie gum sheet 62. The joint width WL agrees with the length from the edge 44 of the inner liner 20 to the first edge 50 of the tie gum 24 in the tire 2 shown in FIG. 1.

In manufacture of the tire 2, the joint width WL is not less than 5 mm and not greater than 10 mm. By the joint width WL being set to be not less than 5 mm, the inner liner 20 is sufficiently joined to each tie gum 24, so that the inner liner 20 is prevented from peeling from the tie gum 24. Since a sufficient joint width is obtained, favorable internal pressure maintaining performance is achieved in the tire 2. By the joint width WL being set to be not greater than 10 mm, the tie gum 24 having a sufficient volume is formed between the carcass 12 and each chafer 22, particularly, at a radially inner side portion with respect to the core 30 of the bead 10, in the tire 2. The tire 2 is less likely to be displaced relative to the rim R.

In FIG. 3, a double-headed arrow WT represents the width of the tie gum sheet 62. A double-headed arrow TT represents the thickness of the tie gum sheet 62.

In manufacture of the tire 2, the width WT of each tie gum sheet 62 is not less than 25 mm and not greater than 40 mm. By the width WT being set to be not less than 25 mm, the tie gum 24 having a sufficient volume is formed between the carcass 12 and each chafer 22, particularly, at the radially inner side portion with respect to the core 30 of the bead 10, in the tire 2. The tire 2 is less likely to be displaced relative to the rim R. By the width WT being set to be not greater than 40 mm, the volume of the tie gum 24 at the radially inner side portion with respect to the core 30 of the bead 10 is appropriately maintained in the tire 2. In the tire 2, an increase in fitting pressure and influence of the tie gum 24 on the weight are suppressed.

In manufacture of the tire 2, the thickness TT of each tie gum sheet 62 is preferably not less than 0.5 mm and not greater than 1.3 mm. By the thickness TT being set to be not less than 0.5 mm, the tie gum 24 having a sufficient volume is formed between the carcass 12 and each chafer 22, particularly, at the radially inner side portion with respect to the core 30 of the bead 10, in the tire 2. The tire 2 is less likely to be displaced relative to the rim R. By the thickness TT being set to be not greater than 1.3 mm, the volume of the tie gum 24 at the radially inner side portion with respect to the core 30 of the bead 10 is appropriately maintained in the tire 2. In the tire 2, an increase in fitting pressure and influence of the tie gum 24 on the weight are suppressed.

In FIG. 3, a double-headed arrow T1 represents the thickness of the first film 66. A double-headed arrow T2 represents the thickness of the second film 68.

In the case where the inner liner 20 is composed of the first layer 46 and the second layer 48, in manufacture of the tire 2, the thickness T1 of the first film 66 is preferably not less than 0.2 mm and not greater than 0.8 mm. By the thickness T1 being set to be not less than 0.2 mm, the first layer 46 effectively contributes to the internal pressure maintaining performance of the tire 2 in cooperation with the second layer 48. By the thickness T1 being set to be not greater than 0.8 mm, influence of the first layer 46 on the weight is suppressed in the tire 2. In the case where the inner liner 20 is composed of the first layer 46, the thickness T1 of the first film 66 is preferably not less than 0.5 mm in light of internal pressure maintaining performance, and is preferably not greater than 1.5 mm in light of influence on the weight of the tire 2.

In manufacture of the tire 2, the thickness T2 of the second film 68 is preferably not less than 0.2 mm and not greater than 0.8 mm. By the thickness T2 being set to be not less than 0.2 mm, the second film 68 contributes to the stickiness and the adhesiveness of the inner liner 20. The second layer 48, which is the processed product of the second film 68, contributes to the internal pressure maintaining performance of the tire 2 in cooperation with the first layer 46. By the thickness T2 being set to be not greater than 0.8 mm, influence of the second layer 48 on the weight is suppressed in the tire 2.

### EXAMPLES

### [Example 1]

The intermediate component shown in FIG. 3 was prepared, and the tire shown in FIGS. 1 and 2 was produced. The size of the tire is 195/65R15. The thickness TI of the inner liner was set to 1.0 mm. The width WT of each tie gum sheet was set to 25 mm. The thickness TT of each tie gum sheet was set to 0.7 mm. "8" is shown in the row of "logR" in Table 1 below and indicates that the volume resistivity of each tie gum was set to 10⁸ Ω·cm. The joint width WL of the inner film and each tie gum sheet was set to 10 mm.

In Example 1 (abbreviated as "Ex. 1" in table 1), the inner liner is composed of a first layer and a second layer. In the inner liner, the first layer and the second layer were formed so as to have the same thickness.

In Example 1, an inner film was prepared by co-extruding a thermoplastic elastomer composition for the first layer and a thermoplastic elastomer composition for the second layer.

For the first layer, a thermoplastic elastomer composition having the following components was used.

| | |
|---|---|
| • Base polymer (SIBS) (*1) | 100 parts by weight |
| • Tackifier (*2) | 10 parts by weight |

For the second layer, a thermoplastic elastomer composition having the following components was used.

| | |
|---|---|
| • Base polymer | 100 parts by weight |
| SIS (*3) | (50 parts by weight) |
| SIBS (*1) | (50 parts by weight) |

| | |
|---|---|
| (*1) Styrene-isobutylene-styrene block copolymer (trade name "SIBSTAR 102T (Shore A hardness = 25, styrene component content = 25% by weight, weight average molecular weight = 100000)" manufactured by Kaneka Corporation). (*2) Trade name "ARKON P140 (C9 petroleum resin, softening point = 140°C, weight average molecular weight = 70000)" manufactured by Arakawa Chemical Industries, Ltd. (*3) Styrene-isoprene-styrene block copolymer (trade name "D1161JP (styrene component content = 15% by weight, weight average molecular weight = 150000)" manufactured by Kraton Corporation). | |

### [Comparative Example 1]

In Comparative Example 1 (abbreviated as "Comp. 1" in table 1), a conventional tire was manufactured. As the inner liner of Comparative Example 1, a conventional inner liner is used. The inner liner is composed of two layers each formed from a rubber composition. In the rubber composition for one of the layers (hereinafter, butyl layer), the principal component of the base rubber is isobutylene-isoprene-rubber. In the rubber composition for the other layer (tie gum layer), the principal component of the base rubber is natural rubber. The thickness of the butyl layer was 1.0 mm, and the thickness of the tie gum layer was 1.0 mm (the thickness of the inner liner = 2.0 mm) .

### [Comparative Example 2]

A tire of Comparative Example 2 was manufactured in the same manner as Example 1, except the tie gums were not used. In Comparative Example 2, the joint width of each chafer and the inner liner was set to 10 mm. This is shown as "10" in the row of the joint width WL in Table 1 below.

### [Comparative Example 3]

A tire of Comparative Example 3 was manufactured in the same manner as Example 1, except the width WT of each tie gum sheet and the volume resistivity of each tie gum were as shown in Table 1 below.

### [Examples 2 to 4 and Comparative Example 4]

Tires of Examples 2 to 4 and Comparative Example 4 were manufactured in the same manner as Example 1, except the thickness TI of the inner liner was as shown in Table 2 below.

### [Examples 5 to 7]

Tires of Examples 5 to 7 were manufactured in the same manner as Example 1, except the joint width WL was as shown in Table 3 below.

### [Examples 8 to 10]

Tires of Examples 8 to 10 were manufactured in the same manner as Example 1, except the width WT of each tie gum sheet was as shown in Table 3 below.

### [Examples 11 to 14]

Tires of Examples 11 to 14 were manufactured in the same manner as Example 1, except the width WT and the thickness TT of each tie gum sheet were as shown in Table 4 below.

### [Manufacturability]

In manufacture of each tire, whether the intermediate component excessively stuck to a roll and whether the inner liner peeled from the chafer in a state of a raw cover were confirmed. The results are shown in Tables 1 to 4 below. In Tables 1 to 4, the results are shown as "GOOD" when a tire was able to be manufactured without occurrence of excessive sticking and peeling, and are shown as "BAD" when excessive sticking or peeling occurred and a tire was not able to be manufactured.

### [Weight]

The weight of each tire was measured. The results are shown in Tables 1 to 4 below as indexes with the value of Comparative Example 1 being defined as 100. The lower the value is, the lighter the tire is.

### [Internal Pressure Maintaining Performance]

Each tire was mounted onto a normal rim and inflated with air to an internal pressure of 230 kPa. In the air-inflated state, the tire was stored at room temperature (20°C to 30°C). At the time when 2 months elapsed, the internal pressure of the tire was measured, and the reduction ratio of the internal pressure was obtained. The results are shown in Tables 1 to 4 below as indexes with the value of Comparative Example 1 being defined as 100. The lower the value is, the more the internal pressure is maintained. 80 or lower as an index value was set as a target.

### [Detachment from Rim]

Each tire was mounted onto a normal rim and inflated with air to an internal pressure of 230 kPa. Lateral force was applied to the bead portion of the tire in compliance with the test conditions specified in FMVSS139, and the lateral force applied when the bead portion became detached from a seat surface of the rim was measured. The results are shown in Tables 1 to 4 below as indexes with the value of Comparative Example 1 being defined as 100. The higher the value is, the more the tire is unlikely to be detached from the rim. 75 or higher as an index value was set as a target.

### [Hofmann]

The tightening force of each test tire was measured with a Hofmann compression tester. The results are shown in Tables 1 to 4 below as indexes with the value of Comparative Example 1 being defined as 100. The higher the value is, the greater the tightening force is, and the more the tire is unlikely to be displaced relative to the rim. Being in a range of 65 to 135 as an index value was set as a target.

### [Fittability]

Each tire was fitted to a normal rim, was filled with air (supply pressure = 600 kPa), and was mounted onto the rim. At the moment when the bead portion of the tire climbed over a hump of the rim, the filling with air was stopped once, and the pressure (fitting pressure) was measured. The results are shown in Tables 1 to 4 below as indexes with the value of Comparative Example 1 being defined as 100. The higher the value is, the higher the fitting pressure is. 250 or lower as an index value was set as an acceptable level, and 125 or lower was set as a target.

**Table 1 Results of Evaluation**

| | Comp. 1 | Comp. 2 | Comp. 3 | Ex. 1 |
|---|---|---|---|---|
| Inner liner | | | | |
| Thickness TI [mm] | - | 1.0 | 1.0 | 1.0 |
| Tie gum | | | | |
| Width WT [mm] | - | - | 15 | 25 |
| Thickness TT [mm] | - | - | 0.7 | 0.7 |
| logR [Ω·cm] | - | - | 9 | 8 |
| Joint width WL [mm] | - | 10 | 10 | 10 |
| Manufacturability | GOOD | BAD | BAD | GOOD |
| Weight | 100 | - | - | 96 |
| Internal pressure maintaining performance | 100 | - | - | 64 |
| Detachment from rim | 100 | - | - | 96 |
| Hofmann | 100 | - | - | 96 |
| Fittability | 100 | - | - | 96 |

**Table 2 Results of Evaluation**

| | Ex. 2 | Ex. 3 | Ex. 4 | Comp. 4 |
|---|---|---|---|---|
| Inner liner | | | | |
| Thickness TI [mm] | 0.3 | 0.5 | 1.5 | 1.8 |

| Tie gum | | | | |
|---|---|---|---|---|
| Width WT [mm] | 25 | 25 | 25 | 25 |
| Thickness TT [mm] | 0.7 | 0.7 | 0.7 | 0.7 |
| logR [Ω·cm] | 8 | 8 | 8 | 8 |
| Joint width WL [mm] | 10 | 10 | 10 | 10 |
| Manufacturability | GOOD | GOOD | GOOD | GOOD |
| Weight | 92 | 94 | 99 | 101 |
| Internal pressure maintaining performance | 83 | 68 | 57 | 53 |
| Detachment from rim | 96 | 96 | 96 | 96 |
| Hofmann | 92 | 97 | 92 | 89 |
| Fittability | 83 | 83 | 83 | 75 |

**Table 3 Results of Evaluation**

| | Ex. 5 | Ex. 6 | Ex. 7 | Ex. 8 | Ex. 9 | Ex. 10 |
|---|---|---|---|---|---|---|
| Inner liner | | | | | | |
| Thickness TI [mm] | 1.0 | 1.0 | 1.0 | 1.0 | 1.0 | 1.0 |
| Tie gum | | | | | | |
| Width WT [mm] | 25 | 25 | 25 | 15 | 35 | 40 |
| Thickness TT [mm] | 0.7 | 0.7 | 0.7 | 0.7 | 0.7 | 0.7 |
| logR [Ω·cm] | 8 | 8 | 8 | 8 | 8 | 8 |
| Joint width WL [mm] | 3 | 5 | 15 | 10 | 10 | 10 |
| Manufacturability | GOOD | GOOD | GOOD | GOOD | GOOD | GOOD |
| Weight | 96 | 96 | 96 | 95 | 97 | 97 |
| Internal pressure maintaining performance | 83 | 64 | 64 | 64 | 64 | 64 |
| Detachment from rim | 99 | 96 | 92 | 71 | 96 | 96 |
| Hofmann | 92 | 96 | 72 | 61 | 95 | 92 |
| Fittability | 92 | 96 | 79 | 67 | 92 | 92 |

**Table 4 Results of Evaluation**

| | Ex. 11 | Ex. 12 | Ex. 13 | Ex. 14 |
|---|---|---|---|---|
| Inner liner | | | | |
| Thickness TI [mm] | 1.0 | 1.0 | 1.0 | 1.0 |

| Tie gum | | | | |
|---|---|---|---|---|
| Width WT [mm] | 25 | 25 | 40 | 40 |
| Thickness TT [mm] | 0.3 | 0.5 | 1.3 | 1.6 |
| logR [Ω·cm] | 8 | 8 | 8 | 8 |
| Joint width WL [mm] | 10 | 10 | 10 | 10 |
| Manufacturability | GOOD | GOOD | GOOD | GOOD |
| Weight | 95 | 96 | 98 | 98 |
| Internal pressure maintaining performance | 64 | 64 | 64 | 64 |
| Detachment from rim | 75 | 93 | 100 | 113 |
| Hofmann | 79 | 90 | 111 | 145 |
| Fittability | 75 | 88 | 200 | 267 |

As shown in Tables 1 to 4, the evaluation for the tires of the examples is higher than that for the tires of the comparative examples. From the results of evaluation, advantages of the present invention are clear.

The above-described technique regarding the inner liner is also applicable to various types of tires.

The above descriptions are merely illustrative examples, and various modifications can be made without departing from the principles of the present invention.

## Claims

1. A pneumatic tire comprising a pair of beads (10), a carcass (12), an inner liner (20), a pair of chafers (22), and a pair of tie gums (24), wherein
the carcass (12) extends on and between one of the beads (10) and the other of the beads (10),
the inner liner (20) is joined to an inner surface of the carcass (12),
each chafer (22) is turned up around the bead (10),
each tie gum (24) is located between the carcass (12) and the chafer (22), and
the tie gum (24) joins the inner liner (20) and the chafer (22) and has a volume resistivity of not greater than 10⁸ Ω·cm, **characterized in that**
the inner liner (20) is formed from a thermoplastic elastomer composition including a styrene-isobutylene-styrene block copolymer and has a thickness of not greater than 1.5 mm and
a joint width (WL) of the inner liner (20) and the tie gum (24) is not less than 5 mm and not greater than 10 mm, wherein the joint width (WL) is the length from the edge (44) of the inner liner (20)to the first edge (50) of the tie gum (24)in the tire (2)_{.}

2. The pneumatic tire according to claim 1, wherein the inner liner (20) has a thickness of not less than 0.5 mm.

3. A method for manufacturing a pneumatic tire according to claim 1 or 2, wherein
the tie gum (24) is produced from a tie gum sheet (62) having a width of not less than 25 mm and not greater than 40 mm.

4. Method according to claim 3, wherein the tie gum sheet (62) has a thickness of not less than 0.5 mm and not greater than 1.3 mm.

## Patentansprüche

1. Luftreifen, der ein Paar Wülste (10), eine Karkasse (12), einen Innerliner (20), ein Paar Wulstbänder (22) und ein Paar Anbindungsgummis (24) umfasst, wobei
die Karkasse (12) sich auf und zwischen einem der Wülste (10) und dem anderen der Wülste (10) erstreckt,
der Innerliner (20) mit einer Innenfläche der Karkasse (12) verbunden ist,
jedes Wulstband (22) um den Wulst (10) umgeschlagen ist,
jeder Anbindungsgummi (24) zwischen der Karkasse (12) und dem Wulstband (22) angeordnet ist, und
der Anbindungsgummi (24) den Innerliner (20) und das Wulstband (22) verbindet und einen spezifischen Volumenwiderstand von nicht mehr als 10⁸ Ω·cm aufweist, **dadurch gekennzeichnet, dass**
der Innerliner (20) aus einer thermoplastischen Elastomerzusammensetzung gebildet ist, die ein Styrol-Isobutylen-Styrol-Blockcopolymer enthält und eine Dicke von nicht mehr als 1,5 mm aufweist, und
eine Verbindungsbreite (WL) des Innerliners (20) und des Anbindungsgummis (24) nicht weniger als 5 mm und nicht mehr als 10 mm beträgt, wobei die Verbindungsbreite (WL) die Länge von der Kante (44) des Innerliners (20) bis zur ersten Kante (50) des Anbindungsgummis (24) in dem Reifen (2) ist.

2. Luftreifen nach Anspruch 1, wobei der Innerliner (20) eine Dicke von nicht weniger als 0,5 mm aufweist.

3. Verfahren zur Herstellung eines Luftreifens nach Anspruch 1 oder 2, wobei der Anbindungsgummi (24) aus einer Anbindungsgummibahn (62) mit einer Breite von nicht weniger als 25 mm und nicht mehr als 40 mm hergestellt wird.

4. Verfahren nach Anspruch 3, wobei die Anbindungsgummibahn (62) eine Dicke von nicht weniger als 0,5 mm und nicht mehr als 1,3 mm aufweist.

## Revendications

1. Bandage pneumatique comprenant une paire de talons (10), une carcasse (12), une doublure intérieure (20), une paire de bandelettes de talon, et une paire de gommes de liaison (24), dans laquelle
la carcasse (12) s'étend sur et entre l'un des talons (10) et l'autre des talons (10),
la doublure intérieure (20) est jointe à une surface intérieure de la carcasse (12),
chaque bandelette de talon (22) est retournée autour du talon (10), chaque gomme de liaison (24) est située entre la carcasse (12) et la bandelette de talon (22), et
la gomme de liaison (24) réunit la doublure intérieure (20) et la bandelette de talon (22) et présente une résistivité en volume qui n'est pas supérieure à 10⁸ Ω·cm,
**caractérisé en ce que**
la doublure intérieure (20) est formée d'une composition élastomère thermoplastique incluant un copolymère bloc styrène-isobutylène-styrène et a une épaisseur qui ne dépasse pas 1,5 mm, et
une largeur conjointe (WL) de la doublure intérieure (20) et de la gomme de liaison (24) n'est pas inférieure à 5 mm et n'est pas supérieure à 10 mm, ladite largeur conjointe (WL) étant la longueur allant du bord (44) de la doublure intérieure (20) jusqu'au premier bord (50) de la gomme de liaison (24) dans le pneumatique (2).

2. Bandage pneumatique selon la revendication 1, dans lequel la doublure intérieure (20) a une épaisseur qui n'est pas inférieure à 0,5 mm.

3. Procédé pour la fabrication d'un bandage pneumatique selon la revendication 1 ou 2, dans laquelle
la gomme de liaison (24) est produite à partir d'une feuille de gomme de liaison (62) ayant une largeur qui n'est pas inférieure à 25 mm et qui n'est pas supérieure à 40 mm.

4. Procédé selon la revendication 3, dans lequel la feuille de gomme de liaison (62) a une épaisseur qui n'est pas inférieure à 0,5 mm et qui n'est pas supérieure à 1,3 mm.
